# EUROPÄISCHE PATENTSCHRIFT

(11) **EP 0 899 985 B1**
(45) Veröffentlichungstag und Bekanntmachung des Hinweises auf die Patenterteilung: **16.03.2005**
(21) Anmeldenummer: 97115039.6
(22) Anmeldetag: 29.08.1997
(51) Int. Cl.: H05B 3/14

(54) **Durchlauferhitzer**
Continuous flow heater
Chauffe-liquide instantané

(43) Veröffentlichungstag der Anmeldung: 03.03.1999
(73) Patentinhaber: David & Baader DBK Spezialfabrik elektrischer Apparate und Heizwiderstände GmbH, 76870 Kandel (DE)
(72) Erfinder: Beetz, Klaus Dr., 76187 Karlsruhe (DE); Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A- 0 019 376
- EP-A- 0 282 085
- DE-A- 2 948 591
- DE-A- 3 810 051
- FR-A- 2 634 090
- US-A- 5 354 965

## Beschreibung

Die vorliegende Erfindung bezieht sich auf einen Durchlauferhitzer zum Erwärmen von Flüssigkeit in einem geschlossenen Kreislauf in einem Kraftfahrzeug gemäß dem Oberbegriff des Patentanspruchs 1.

Für die Beheizung des Innenraumes von Fahrzeugen stehen neben emissionsbehafteten Brennstoffzuheizern auch emissionsfreie Alternativen zur Verfügung. Letztere sind insbesondere für den Einbau in "no emission'' Elektrofahrzeuge interessant. Zu den emissionsfreien Heizkonzepten zählt neben einer Wärmepumpe, die die bei der Kompression von Kältemitteln entstehende Wärme nutzt, auch eine PTC-Luftheizung.

Aus der DE 44 36 791 A1 ist eine solche PTC-Luftheizung für die Anwendung in Kraftfahrzeugen bekannt, bei der die Luft an beheizten Wellrippen vorbeiströmt und auf diese Weise erwärmt wird. Die Wellrippen dienen dabei als Wärmetauscher und werden von einer warmen Flüssigkeit und/oder von PTC-Heizelementen beheizt.

Als Variante bietet sich eine ausschließliche Beheizung des Wärmetauschers mit aufgeheizter Kühlflüssigkeit aus einem im Fahrzeug vorhandenen Kühlkreislauf an. Dabei reicht jedoch oftmals die Temperatur der durch Kühlung des Fahrzeugantriebs aufgeheizten Kühlflüssigkeit nicht aus, um die den Wärmetauscher durchströmende Luft in ausreichendem Maße schnell zu erwärmen. Deshalb ist eine zusätzliche Aufheizung der Kühlflüssigkeit erforderlich, bevor sie den Wärmetauscher durchfließt. Dazu wird die Kühlflüssigkeit in einem vorgeschalteten Durchlauferhitzer zusätzlich erwärmt, indem sie durch Heizkörper geleitet wird, die mittels elektrischer Heizelemente beheizt werden.

Bei den bekannten Durchlauferhitzern dieser Art sind die Heizelemente als elektrische Widerstands-Heizetemente ausgebildet. Sie besitzen extrem hohe Temperaturen an der Wärmequelle (Glühwendel, Heizspirale etc.), was die Gefahr einer Überhitzung für benachbarte Bauteile darstellen kann, wenn die Temperatur der Wärmequelle nicht geregelt oder überwacht wird. Zur Vermeidung von Temperaturschäden durch die hohen Temperaturen dieser Wärmequellen, die deutlich oberhalb der Temperatur der zu erwärmenden Flüssigkeit liegen, sind die Wärmequelle und der von ihr zu beheizende Heizkörper voneinander entfernt angeordnet. Allerdings entstehen dadurch Wärmeverluste und ein erhöhter Raumbedarf für den Durchlauferhitzer

Die deutsche Offenlegungsschrift DE 38 10 051 A1 zeigt einen elektrischen Durchlauferhitzer mit PTC-Heizelementen, bei dem zwei halbkreisringförmige Rohrprofilteile, zwischen denen PTC-Elemente zum Beheizen der Rohrprofilteile angeordnet sind, in einem Flüssigkeitsstrom angeordnet werden. Die Rohrprofilteile bilden, aufeinanderlegt, zusammen einen Kreisquerschnitt.

Aus der europäischen Offenlegungsschrift EP 0 019 376 A1 ist eine Heizvorrichtung zum Erwärmen eines Fluids bekannt, bei der das Fluid Wärmeübertragungsblöcke passiert, die mittels PTC-Heizelementen erwärmt werden. Die Wärmeübertragungsblöcke werden dabei mit einem Rahmen verbunden, in dem die PTC-Elemente gehalten sind, und das Fluid, beispielsweise Luft, durchströmt die parallel angeordneten Öffnungen in Richtung des Luftstroms.

Das Dokument EP 0 282 085 A1 offenbart ein Heizelement zum Erwärmen strömender Medien, bei dem als Wärmetauscher ein aus mehreren Einzelkörpern sich zusammensetzender Metallkörper verwendet wird. Zwischen den Einzelkörpern sind PTC-Elemente, die der Heizung dienen, angebracht. Dabei sind die Öffnungen, die von dem zu erwärmenden Fluid durchströmt werden, in Strömungsrichtung angeordnet.

Es ist die Aufgabe der vorliegenden Erfindung, einen hinsichtlich Sicherheit und Energieverlust verbesserten Durchlauferhitzer bereitzustellen.

Diese Aufgabe wird von einem Durchlauferhitzer mit den im Patentanspruch 1 definierten Merkmalen gelöst.

Das besondere des erfindungsgemäßen Durchlauferhitzers liegt in der Verwendung eines PTC-Heizelementes zur Erwärmung des Heizkörpers. PTC-Heizelemente weisen einen positiven Temperaturkoeffizienten (PTC) auf, d.h. bei Erwärmung steigt ihr elektrischer Widerstand an, was bei steigender Temperatur ein Absinken der Heizleistung bewirkt. Dieser Selbstregulierungsmechanismus veranlaßt das PTC-Heizelement seine Temperatur selbst zu stabilisieren, so daß vorgegebene Grenztemperaturen nicht überschritten werden.

Aufgrund dieser Eigenschaft des PTC-Heizlelementes ergeben sich für den erfindungsgemäßen Durchlauferhitzer zahlreiche Vorteile.

Das temperaturstabilisierende Regelverhalten des PTC-Heizelementes trägt erheblich zu dessen eigener Sicherheit und damit auch zur Sicherheit des Durchlauferhitzers bei, weil selbst bei Trockenlauf oder im Fehlerfall vorgegebene Grenztemperaturen der Wärmequelle nicht überschritten werden. Diese Sicherheit gewährt das PTC-Heizelement, im Gegensatz zum Stand der Technik, automatisch, also ohne eine zusätzliche, raumgreifende, gewichtige und kostenaufwendige Temperaturüberwachung der Wärmequelle.

Darüber hinaus liegen die üblichen Betriebstemperaturen des PTC-Heizelementes im Unterschied zum Stand der Technik nicht allzu sehr über der Temperatur der zu erwärmenden Flüssigkeit. Dies gestattet und erfordert eine platzsparende, enge Nachbarschaft des PTC-Heizelementes zum Heizkörper, um auf diese Weise eine gute Wärmeübertragung mit entsprechend geringen Wärmeverlusten sicherzustellen.

Weiterhin gestatten die niedrigen Betriebstemperaturen des Durchlauferhitzers, die selbst im Fehlerfalle seine unmittelbare Umgebung nicht über 100° C erwärmen, seinen Einbau in ein preisgünstiges und leichtes Kunststoffgehäuse. Durch die kompakte Bauweise und das relativ geringe Gewicht eignet sich der erfindungsgemäße Durchlauferhitzer nicht nur für die Verwendung in Kraftfahrzeugen mit Verbrennungsmotoren, sondern insbesondere auch für die Verwendung in Elektrofahrzeugen zumal letztere i.d.R. ebenfalls über einen Flüssigkeitskreislauf zur Kühlung ihrer Batterien verfügen.

Gemäß einer vorteilhaften Ausgestaltung sind die Heizkörper im Durchlauferhitzer als Strangpressprofile ausgebildet, was eine kostengünstige Massenfertigung der Heizkörper als Endlosware gestattet.

Vorzugsweise besteht ein Heizelement aus mehreren PTC-Widerständen, die zwischen zwei planparallelen metallischen Elektroden angeordnet und parallelgeschaltet sind. Diese Konstruktion ist sehr platzsparend, es können Fertigungstoleranzen der PTC-Widerstände ausgeglichen werden und die Elektroden stellen einen großflächigen ebenen Wärmeübergang zu den zu erwärmenden Heizkörpern dar.

Weiterhin ist es von Vorteil, jeweils abwechselnd einen Heizkörper und ein PTC-Heizelement eng übereinander zu schichten. Diese Schichtweise ist nicht nur sehr kompakt, sondern bietet darüber hinaus auch eine gute schichtübergreifende Wärmeverteilung, weil jeweils ein PTC-Heizelement großflächig von zwei Heizkörpern kontaktiert wird und diese so gleichzeitig beheizt.

In einer weiteren vorteilhaften Ausgestaltung weist der Durchlauferhitzer eine Regeleinrichtung zur Regelung der Temperatur der zu erwärmenden Flüssigkeit auf. Dazu ist die Regeleinrichtung so ausgebildet, daß sie, je nach gewünschter Wärmeleistung, einzelne Heizelemente zu oder abschaltet.

Der Einsatz der PTC-Heizelemente bietet den Vorteil, daß der Durchlauferhitzer ohne verlustbehafteten vorgeschalteten Spannungsteiler für breite Spannungsbereiche von etwa 100V - 400V einsetzbar ist.

Es ist von Vorteil, die geschichteten Heizkörper an ihren beiden Stirnseiten über jeweils einen Deckel so abzuschließen, daß ihre innenliegenden Kanäle auf einfache Weise zu einem zusammenhängenden Kanalsystem verbunden werden.

Gemäß einer vorteilhaften Ausgestaltung sind die verwendeteten Deckel aus Kunststoff gefertigt, was nur aufgrund der niedrigen Betriebstemperaturen des Durchlauferhitzers möglich ist. Kunststoff bietet hier die Vorteile eines geringen Gewichtes und der Möglichkeit zur preisgünstigen Massenproduktion.

Schließlich bietet die Ausbildung eines der beiden Deckel als Flüssigkeitsanschluß und die Ausbildung des anderen Deckels als elektrischen Anschluß für den Durchlauferhitzer die Möglichkeit einer räumlichen Trennung beider Anschlüsse. Dieses Anschlußkonzept leistet einen wesentlichen Beitrag zur Betriebssicherheit des Durchlauferhitzers.

Im folgenden wird eine bevorzugte Ausführungsform der Erfindung unter Bezugnahme auf die beigefügten Zeichnungen näher beschrieben. Es zeigen:
- Fig. 1: einen Querschnitt entlang der Linie A-A in Fig. 2 durch einen Durchlauferhitzer mit fünf Heizkörpern;
- Fig. 2: einen Längsschnitt durch den Durchlauferhitzer mit fünf Heizkörpern;
- Fig. 3: eine Draufsicht auf den Durchlauferhitzer;
- Fig. 4: einen Deckel des Durchlauferhitzers mit elektrischen Anschlüssen;
- Fig. 5: einen Deckel des Durchlauferhitzers mit Flüssigkeitsanschlüssen;
- Fig. 6: einen Schnitt entlang der Linie B-B in Fig. 5 durch den Deckel des Durchlauferhitzers mit Flüssigkeitsanschlüssen; und
- Fig. 7: ein Diagramm, welches die Heizleistung des Durchlauferhitzers als Funktion der Flüssigkeitseintrittstemperatur darstellt.

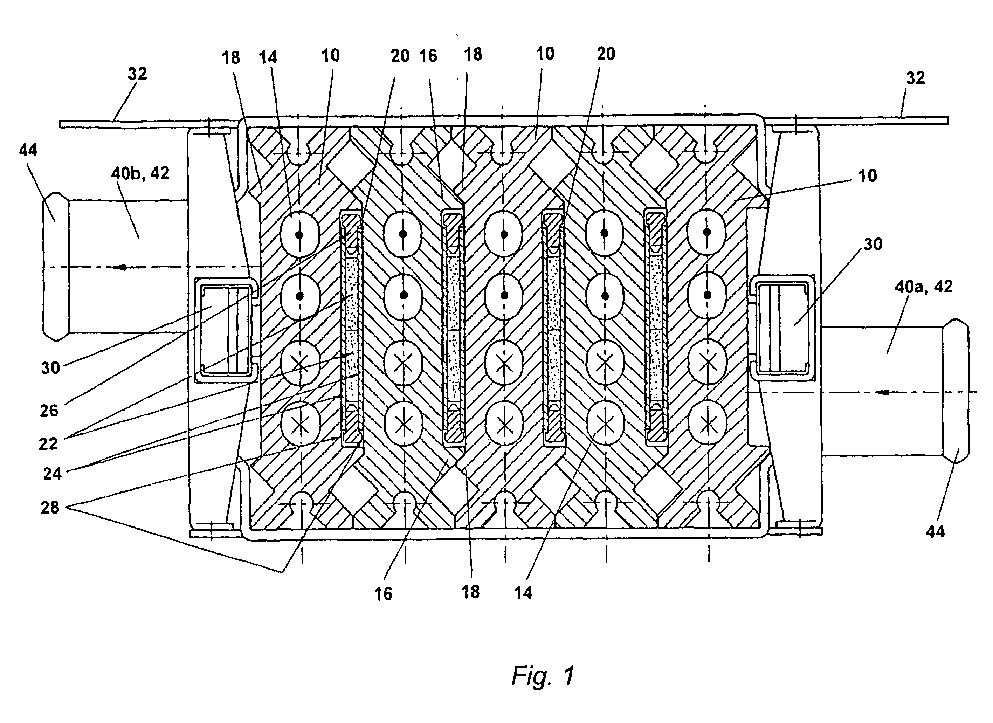

Gemäß Fig. 1 umfaßt der Durchlauferhitzer fünf modular zusammengefügte Heizkörper 10 und vier zwischen die Heizkörper eingefügte PTC-Heizelemente 20. Jeder Heizkörper ist als ein Strangpressprofil aus wärmeleitendem Aluminium ausgebildet. Dieses Profil weist in Längsrichtung vier parallele Kanäle 14 auf, die in einer Ebene liegen und während des Betriebs von der zu erwärmenden Flüssigkeit durchflossen werden. Ebenfalls in Längsrichtung und parallel zur Ebene der Kanäle ist einseitig in jedes Strangpressprofil eine rechteckige Nut zur passgenauen Aufnahme eines PTC-Heizelementes 20 eingelassen. Die Nut wird beidseitig durch Profilnasen 16 des Strangpressprofils begrenzt.

Bei der Aufeinanderschichtung zweier Strangpressprofile greifen die vorstehenden Profilnasen 16 eines ersten Strangpressprofils passgenau in entsprechend ausgebildete Profilkonturen 18 auf der angelagerten Seite eines zweiten Strangpressprofils ein, wodurch eine genaue Positionierung zweier benachbarter Strangpressprofile zueinander sichergestellt wird. Darüber hinaus wird bei der erläuterten Positionierung die Nut des ersten Strangpressprofils von dem angelagerten zweiten Strangpressprofil planar abgeschlossen, so daß zwischen zwei benachbarten Heizkörpern jeweils ein rechteckiger Hohlraum zur passgenauen Aufnahme eines PTC-Heizelementes 20 verbleibt.

Ein PTC-Heizelement 20 umfaßt jeweils zwölf PTC-Widerstände 22, die über zwei planparallele Aluminiumelektroden 24 parallel geschaltet sind. Weil die Abmessungen des Hohlraumes zwischen zwei benachbarten Heizkörpern für die passgenaue Aufnahme eines PTC-Heizelementes ausgelegt sind, entsteht zwischen den Aluminiumelektroden und den angrenzenden Heizkörpern ein großflächiger Wärmekontakt. Neben den Aluminiumelektroden 24 bildet ein an deren Rand umlaufender Positionsrahmen 26 die äußere Begrenzung des PTC-Heizelementes. Der Positionsrahmen ist so ausgebildet, daß er teilweise zwischen die eng beabstandeten Aluminiumelektroden eingreift und diese zugleich in Form einer sie bündig abschließenden, umlaufenden Wulst seitlich begrenzt.

Die PTC-Heizelemente sind in zwei Ausführungen mit Nennspannungen von 120V (Spannungsbereich 90V - 240V, maximal zulässige Spannung 500V) und 300V (Spannungsbereich 180V - 400V, maximal zulässige Spannung 800V) verfügbar. Zum Zweck der elektrischen Isolation sind die PTC-Heizelemente in eine dünne Isolationsfolie 28, z.B. Grünfolie eingeschweißt.

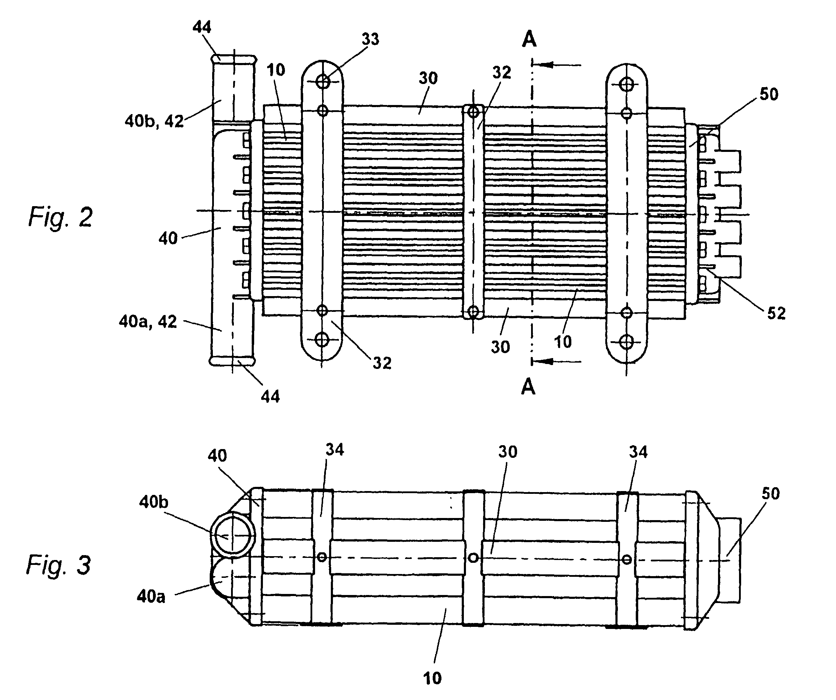

Im folgenden wird Bezug genommen auf die Figuren 2 und 3, welche einen Längsschnitt durch den Durchlauferhitzer und eine Draufsicht zeigen. Die Heizkörper 10 werden von mehreren vertikalen Laschen 32 und horizontalen Traversen 34 zusammengehalten, wobei jeweils zwei gegenüberliegende Laschen und zwei gegenüberliegende Traversen eine geschlossene Manschette bilden, die die Heizkörper vollständig umfaßt. Drei solcher Manschetten sind über die Länge der Heizkörper verteilt. Zur Gewährleistung eines spielfreien Kontaktes der Heizkörper untereinander, auch bei eventuell vorhandenen Fertigungsungenauigkeiten, werden diese innerhalb ihrer Manschettenumfassung durch zwei Federbügel 30 unter leichtem Druck zusammengehalten. Die beiden äußeren der drei Laschen 32 sind auf einer Seite des Durchlauferhitzers über die Höhe der geschichteten Heizkörper hinaus nach unten und oben verlängert und weisen in den überstehenden Bereichen jeweils eine Bohrung 33 auf, die eine Befestigung des Durchlauferhitzers z.B. im Motorraum eines Fahrzeuges gestattet.

An den gegenüberliegenden, offenen Stirnseiten der Heizkörper befinden sich zwei Deckel 40, 50, welche die zunächst nicht miteinander kommunizierenden Kanäle 14 aller Strangpressprofile im Durchlauferhitzer zu einem zusammenhängenden Kanalsystem zwischen zwei an dem Deckel 40 angeordneten Flüssigkeitsanschlüssen 40a und 40b verbinden.

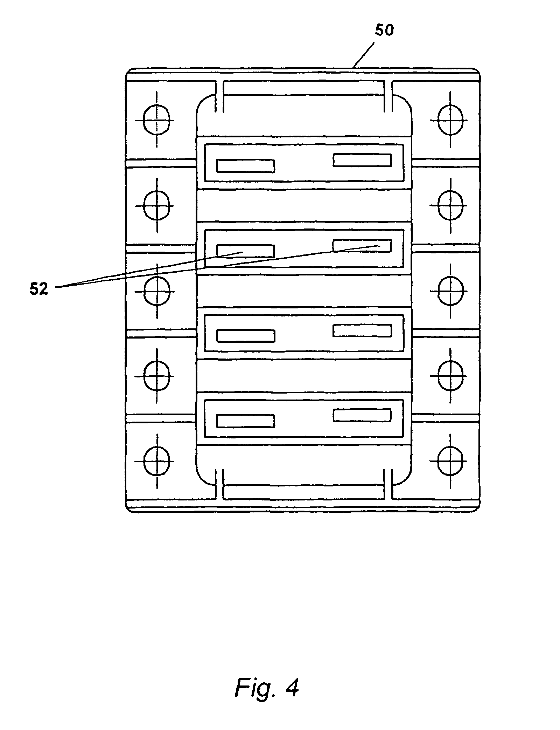

In Fig. 4 ist der Deckel 50 mit elektrischen Anschlüssen 52 dargestellt. Für jedes PTC-Heizelement sind die beiden elektrischen Anschlüsse 52 paarweise nach außen geführt, so daß jedes PTC-Heizelement einzeln zu- oder abgeschaltet werden kann.

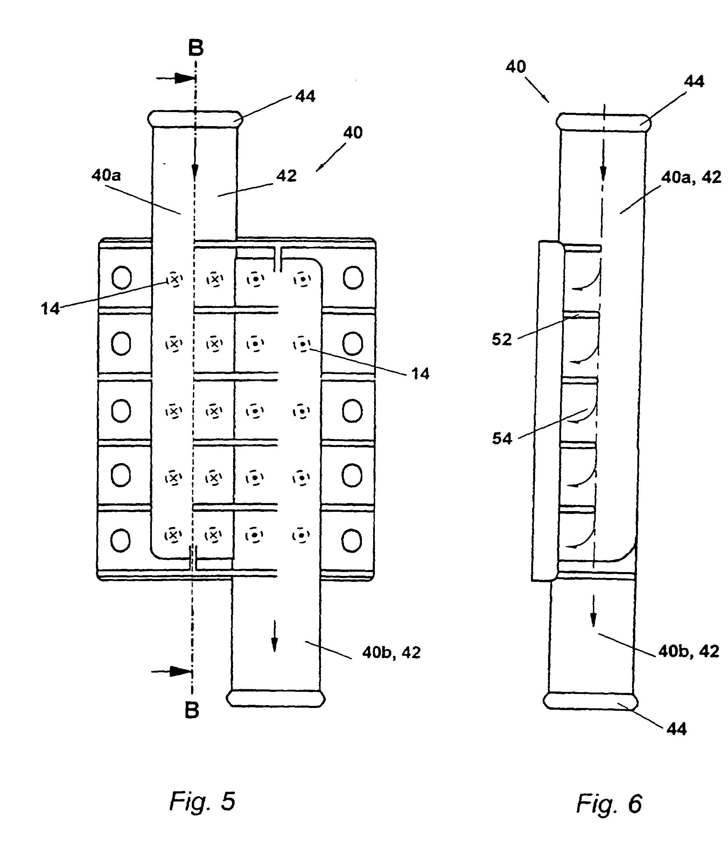

Die Figuren 1, 5 und 6 zeigen die Führung der aufzuheizenden Flüssigkeit im Kanalsystem, wobei die Flußrichtung bei den mit einem Kreuz bezeichneten Kanälen 14 in die Zeichenebene hinein und bei den mit einem Punkt bezeichneten Kanälen aus der Zeichenebene heraus weist. Die aufzuheizende Flüssigkeit tritt zunächst durch einen Stutzen 42 des Einlaß-Flüssigkeitsanschlusses 40a in den Durchlauferhitzer ein. Wie in den Fig. 5 und 6 zu erkennen ist, fließt sie von dort in jeweils paarweise angeordnete Kanäle 14 aller im Durchlauferhitzer vorhandenen Heizkörper 10.

Zur Begünstigung der Strömungsverhältnisse weist der Einlaß-Flüssigkeitsanschluß 40a in seinem Innern Trennwände 52 auf. Diese sind in Flußrichtung parallel hintereinander und auf Höhe der Grenzfläche zwischen den Heizkörpern angeordnet. Durch diese Trennwände 52 entstehen über den der Mitte des Durchlauferhitzers zugewandten Kanälen Kammern 54, die eine gleichmäßige Verteilung der einströmenden Flüssigkeit auf alle Heizkörper bewirken.

Ausgehend vom Deckel 40 fließt die Flüssigkeit durch die Kanäle 14 auf den Deckel 50 zu, wird durch diesen in die paarweise verbliebenen zwei der jeweils insgesamt vier Flüssigkeitskanäle 14 jedes Strangpressprofils umgeleitet. Nach der Umleitung fließt die Flüssigkeit zum Deckel 40 zurück, wo sie durch den Auslaß-Flüssigkeitsanschluß 40b wieder austritt.

Der Auslaß-Flüssigkeitsanschluß 40b entspricht in seinem Aufbau dem beschriebenen Einlaß-Flüssigkeitsanschluß 40a. Die Stutzen 42 beider Flüssigkeitsanschlüsse 40a und 40b weisen an ihrer Ein- bzw. Austrittsöffnung jeweils eine Wulst 44 auf, welche die Verbindungsschläuche des geschlossenen Kühlkreislaufs gegen Abrutschen sichern.

Im Betrieb werden die Heizkörper 10 durch die PTC-Heizelemente 20 beheizt, so daß die Flüssigkeit während des Durchflusses durch die Heizkörper erwärmt wird. Mit Hilfe einer Regeleinrichtung können die PTC-Heizelemente einzeln zu- oder abgeschaltet werden, so daß die Temperatur der durch den Durchlauferhitzer fließenden Flüssigkeit stufenweise an einen gewünschten Wärmeleistungsbedarf angepaßt werden kann.

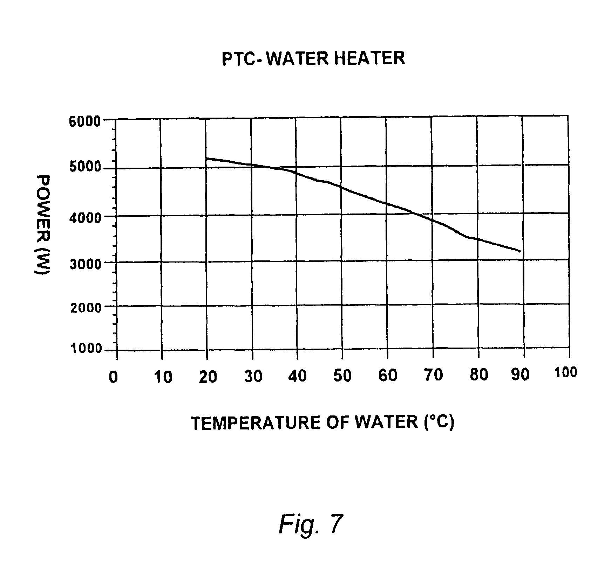

Abschließend sei auf Fig. 7 Bezug genommen, welche in einem Diagramm den Zusammenhang zwischen der elektrischen Heizleistung der PTC-Heizelemente im Durchlauferhitzer in kW und der Temperatur der Kühlflüssigkeit in °C darstellt. Es ist zu erkennen, daß bei Fahrtantritt, wenn die Temperatur der Kühlflüssigkeit beispielsweise erst 30°C beträgt, eine große Heizleistung von ca. 5,1kW zur Verfügung steht, die eine schnelle Aufheizung der Kühlflüssigkeit begünstigt. Wenn dagegen während längerer Fahrtzeiten der Motor warmläuft und die Temperatur der Kühlflüssigkeit auf 80°C ansteigt, wächst gleichzeitig aufgrund des PTC-typischen Verhaltens der Widerstand der PTC-Heizelemente an und ein Absinken der Heizleistung auf ca. 3,5kW ist die Folge; auf diese Weise wird die Temperatur der Kühlflüssigkeit jederzeit automatisch stabilisiert.

## Patentansprüche

1. Durchlauferhitzer zum Erwärmen von Flüssigkeit in einem geschlossenen Kreislauf in einem Kraftfahrzeug, umfassend:
eine Heizvorrichtung mit einer Vielzahl von geschichteten wärmeleitenden Heizkörpern (10) und einer Vielzahl von Kanälen, durch welche die Flüssigkeit strömt,
**dadurch gekennzeichnet daß** die Stirnseiten der geschichteten Heizkörper mit einem Deckel (40, 50) so abgeschlossen sind, dass die Kanäle zu einem zusammenhängenden Kanalsystem verbunden werden, und
und daß die Vielzahl von Heizkörpern (10) eng benachbart zu jeweils einem PTC-Heizelement (20) angeordnet sind.

2. Durchlauferhitzer nach Anspruch 1, **dadurch gekennzeichnet, dass** der Heizkörper (10) als Strangpressprofil ausgebildet ist.

3. Durchlauferhitzer nach Anspruch 1 oder 2, **dadurch gekennzeichnet, dass** jedes PTC-Heizelement (20) mehrere PTC-Widerstände (22) aufweist, die zwischen zwei planparallelen metallischen Elektroden (24) angeordnet und parallelgeschaltet sind.

4. Durchlauferhitzer nach einem der Ansprüche 1 bis 3, **dadurch gekennzeichnet, dass** die eine Vielzahl von Heizkörpern aneinandergelagert sind, wobei jeweils zwischen zwei Heizkörpern (10) ein PTC-Heizelement (20) angeordnet ist.

5. Durchlauferhitzer nach einem der Ansprüche 1 bis 4, **dadurch gekennzeichnet, dass** er eine Regeleinrichtung zur Regelung der Temperatur der zu erwärmenden Flüssigkeit aufweist, wobei die Regeleinrichtung so ausgebildet ist, dass sie die PTC-Heizelemente (20) einzeln zu- oder abschaltet.

6. Durchlauferhitzer nach einem der Ansprüche 1 bis 5, **dadurch gekennzeichnet, dass** die PTC-Heizelemente (20) in einem Nennspannungsbereich von 100V - 400V betreibbar sind und jeweils eine Heizleistung von ca. 800 W erzeugen.

7. Durchlauferhitzer nach einem der Ansprüche 1 bis 6, **dadurch gekennzeichnet, dass** die Deckel (40, 50) aus Kunststoff gefertigt sind.

8. Durchlauferhitzer nach einem der Ansprüche 1 bis 7, **dadurch gekennzeichnet, dass** einer der beiden Deckel (40) als Flüssigkeitsanschluss und der andere Deckel (50) als elektrischer Anschluss für die PTC-Heizelemente (20) ausgebildet ist.

## Claims

1. Flow heater for heating a liquid in a closed cycle in a motor vehicle, comprising:
a heating device with a plurality of stacked heat conducting radiators (10) and
a plurality of channels through which the liquid flows,
**characterized in that**
the front sides of the stacked radiators are closed with a cover (40, 50) in such a manner, that the channels are connected to a communicating channel system,
and that the plurality of radiators (10) are each arranged closely adjacent to a PTC heating element (20).

2. Flow heater according to claim 1, **characterized in that** the radiator (10) is provided as an extruded profile.

3. Flow heater according to claim 1 or 2, **characterized in that** each PTC heating element (20) comprises a plurality of PTC resistors (22), which are arranged between plane-parallel metallic electrodes (24) and which are connected in parallel.

4. Flow heater according to one of the claims 1 to 3, **characterized in that** a plurality of radiators are arranged adjacent to each other, with a PTC heating element (20) being arranged between each two radiators (10).

5. Flow heater according to one of the claims 1 to 4, **characterized in that** the flow heater comprises a control means for controlling the temperature of the liquid to be heated, the control means being able to turn the PTC heating elements (20) individually on and off.

6. Flow heater according to one of the claims 1 to 5, **characterized in that** the PTC heating elements (20) are operable in a nominal voltage range of 100V - 400V and each produce a heat output of 800W.

7. Flow heater according to one of the claims 1 to 6, **characterized in that** the covers (40, 50) are made out of plastics.

8. Flow heater according to one of the claims 1 to 7, **characterized in that** one of the two covers(40) is provided as a liquid terminal and the other one (50) is provided as an electrical terminal for the PTC heating elements (20).

## Revendications

1. Dispositif de chauffage à circulation pour chauffer un liquide en un circuit fermé dans un véhicule automobile, comprenant :
un dispositif de chauffage comprenant une pluralité de corps chauffants (10) conducteurs de la chaleur, placés en couches, et une pluralité de canaux, à travers lesquels s'écoule le liquide, **caractérisé en ce que** les faces frontales des corps chauffants placés en couches sont fermées par un couvercle (40, 50), **en ce que** les canaux sont reliés pour former un système de canaux continu,
et **en ce que** la pluralité de corps chauffants (10) sont disposés de façon étroitement voisine envers chaque fois un élément chauffant (20) à caractéristique de température positive (PTC).

2. Dispositif de chauffage à circulation selon la revendication 1, **caractérisé en ce que** le corps chauffant (10) est réalisé sous la forme de profilé d'extrusion.

3. Dispositif de chauffage à circulation selon la revendication 1 ou 2, **caractérisé en ce que** chaque élément PTC (20) présente plusieurs résistances à caractéristique PTC (22), disposées entre deux électrodes (24) métalliques, parallèles et planes et branchées en parallèle.

4. Dispositif de chauffage à circulation selon l'une des revendications 1 à 3, **caractérisé en ce que** la pluralité de corps chauffants sont placés les uns sur les autres, un élément chauffant à caractéristique PTC (20) étant chaque fois disposé entre deux corps chauffants (10).

5. Dispositif de chauffage à circulation selon les revendications 1 à 4, **caractérisé en ce qu'**il présente un dispositif de régulation pour régler la température du liquide à chauffer, sachant que le dispositif de régulation est réalisé de manière à brancher ou débrancher individuellement les éléments chauffants à caractéristique PTC (20).

6. Dispositif de chauffage à circulation selon l'une des revendications 1 à 5, **caractérisé en ce que** les éléments chauffants à caractéristique PTC (20) peuvent fonctionner sous une plage de tension nominale de 100 V à 400 V et produisent chacun une puissance de chauffage d'environ 800 W.

7. Dispositif de chauffage à circulation selon l'une des revendications 1 à 6, **caractérisé en ce que** les couvercles (40, 50) sont fabriqués en matière synthétique.

8. Dispositif de chauffage à circulation selon l'une des revendications 1 à 7, **caractérisé en ce que** l'un des deux couvercles (40) est réalisé en tant que raccordement pour le liquide et l'autre couvercle (50) est réalisé en tant que raccordement électrique pour les éléments chauffants à caractéristique PTC (20).
